**Europäisches Patentamt**

**European Patent Office**

**Office européen des brevets**

(19)

(11) Numéro de publication: **0 021 942**
**A1**

(12) **DEMANDE DE BREVET EUROPEEN**

(21) Numéro de dépôt: **80400835.7**

(22) Date de dépôt: **10.06.80**

(51) Int. Cl.³: **H 04 L 7/02**
**H 04 N 7/04**

(30) Priorité: **20.06.79 FR 7915806**

(43) Date de publication de la demande:
**07.01.81 Bulletin 81/1**

(84) Etats Contractants Désignés:
**DE GB IT NL**

(71) Demandeur: **"THOMSON-CSF"**
**173, Boulevard Haussmann**
**F-75360 Paris Cedex 08(FR)**

(72) Inventeur: **Wojerz, Daniel**
**"THOMSON-CSF" SCPI 173, bld Haussmann**
**F-75360 Paris Cedex 08(FR)**

(74) Mandataire: **de Beaumont, Michel et al,**
**"THOMSON-CSF" SCPI 173, Bld Haussmann**
**F-75360 Paris Cedex 08(FR)**

(54) Procédé et dispositif pour l'affinage de la remise en phase d'une horloge locale.

(57) L'invention concerne le domaine des systèmes de réception de données transmises sous forme numérique.

Un signal d'horloge le plus favorable $H$ parmi n signaux disponibles, qui présentent des déphasages successifs égaux, est présélectionné à partir d'une salve de synchronisation $S$. Puis on compare ce signal présélectionné avec un signal passant d'un premier état à un second état au milieu de chaque I de la salve, de manière à déterminer si l'horloge présélectionnée se trouve en avance, en retard ou en phase par rapport au signal d'horloge idéal. Le résultats de cette comparaison est mémorisé et on forme, en fonction de lui, un signal d'horloge se trouvant en retard, en avance ou en phase par rapport au signal présélectionné. On obtient ainsi le signal d'horloge le plus favorable parmi 3 n signaux possibles.

Application à la remise en phase d'une horloge de lecture de paquets de données, insérés sur un signal vidéo par multiplexage.

./...

Croydon Printing Company Ltd.

FIG.5

1

## PROCEDE ET DISPOSITIF POUR L'AFFINAGE DE LA REMISE EN PHASE D'UNE HORLOGE LOCALE

La présente invention concerne un procédé pour l'affinage de la remise en phase d'une horloge locale ainsi qu'un dispositif destiné à la mise en oeuvre de ce procédé, ceci dans le domaine des systèmes de réception de données transmises sous forme numérique, en particulier les systèmes utilisant le support constitué par un signal vidéo de télévision pour véhiculer des informations codées sous forme numérique, ces systèmes étant connus sous l'appellation "vidéotexte".

Il est rappelé que, dans ce genre de systèmes, des messages sont transmis sous forme numérique en utilisant un code binaire sans retour à zéro, par paquets de données pouvant provenir d'une ou de plusieurs sources, chaque paquet de données étant précédé d'une salve d'impulsions d'identification et de synchronisation, constituée par une succession de 1 et de 0 alternés. Cette salve fait partie, pour le paquet de données qui suit, d'un "en-tête" destiné entre autres à l'identification de la source d'informations correspondante ; son rôle est de fournir un signal de référence, à fréquence et phase déterminées, sur lequel doit être accordée une horloge locale du récepteur à partir de laquelle est effectué le décodage du message contenu dans le paquet de données. Plus particulièrement, dans le système de "vidéo-texte" ici considéré, les paquets de données sont insérés sur des lignes de télévision, la technique utilisée étant celle du multiplexage temporel des signaux numériques avec un signal d'image analogique, ce qui permet d'utiliser les bandes existantes de fréquence allouées à la diffusion des programmes de télévision. Les paquets de données sont ainsi transmis sur plusieurs lignes successives ou éventuellement sur une ligne isolée parmi d'autres

2

contenant simplement l'information d'image de télévision. Pour un paquet de données correspondant à une ligne de télévision, on insère, après la signal de "synchronisation ligne" habituel, la salve de synchronisation puis le paquet de données, la durée de ladite salve étant petite devant celle du paquet de données (dans un rapport inférieur à 1/10). La technique de transmission choisie exige un ensemble de démodulation se composant d'un récepteur de télévision associé à un système d'interface, apte à être connecté à un terminal sur lequel est reconstitué le message transmis. L'interface se compose d'une partie logique capable de sélectionner la source désirée, et d'une partie de démultiplexage qui extrait du signal vidéo les informations numériques et les remet en forme.

C'est cette partie de démultiplexage qui, pour reconstituer les données transmises par paquets, inclut l'horloge locale et les moyens de remise en phase de ladite horloge en fonction des impulsions de la salve précédant chaque paquet de données. Il convient de synchroniser en fréquence et en phase un oscillateur constituant cette horloge locale, durant une fraction de la durée de la salve, et de maintenir ensuite sa fréquence et sa phase, avec une stabilité suffisante, pendant un temps considérablement plus long, compte tenu du rapport indiqué plus haut entre la durée de la salve et celle du paquet de données.

Ces considérations conduisent, le plus souvent, à choisir une horloge locale constituée par un oscillateur très stable, par exemple à quartz, dont la fréquence est imposée par construction à une valeur double de celle des impulsions de la salve de synchronisation, ceci compte-tenu du choix d'un codage sans retour à zéro. L'horloge de lecture idéale est celle dont les impulsions sont des fronts actifs placés au milieu des 1 et des 0 de la salve de synchronisation. Pour s'approcher de cette horloge idéale, on dérive, à partir d'un

3

oscillateur local ayant la fréquence désirée, quatre signaux d'horloge de même fréquence mais présentant des déphasages égaux au quart de leur période commune. On peut aussi partir d'un oscillateur stable de fréquence multiple de la fréquence d'horloge désirée, et obtenir les quatre signaux d'horloge de phases différentes par des divisions de fréquence successives, ce qui revient au même. A partir de quatre comparateurs de phase, dont chacun compare l'un des signaux d'horloge avec la salve de synchronisation, on détermine celui des signaux d'horloge qui présente un écart de phase minimum avec la salve de synchronisation, donc le signal d'horloge disponible ayant la phase la plus favorable, à défaut du signal idéal.

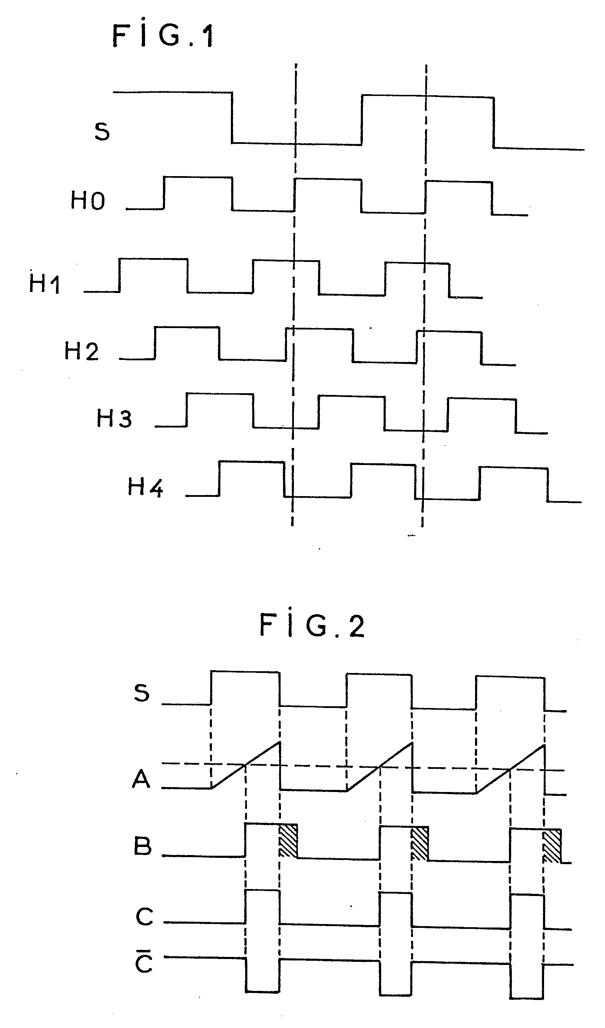

Ceci est illustré par le diagramme de la figure 1 du dessin annexé, sur lequel on a indiqué, de haut en bas :

- la salve de synchronisation $\underline{S}$ ;

- les impulsions de l'horloge idéale $\underline{HO}$, de fréquence double de celle de la salve, et dont les fronts montants sont exactement centrés sur les 1 et les 0 de ladite salve ;

- les quatre signaux d'horloge $\underline{H1}$, $\underline{H2}$, $\underline{H3}$ et $\underline{H4}$, présentant des déphasages successifs égaux.

Dans l'exemple représenté, c'est le signal d'horloge $\underline{H2}$ qui est sélectionné à la sortie du quadruple comparateur.

On comprend, notamment en se référant à la figure 1, que l'écart de phase entre l'horloge idéale et l'horloge sélectionnée peut atteindre la valeur $\pm$ $\pi/4$, si 2 $\pi$ désigne la période d'horloge. Un tel déphasage est prohibitif : malgré la recherche de stabilité du signal d'horloge, déjà évoquée plus haut, il existe toujours une certaine dérive dans le temps de la fréquence et de la phase de ce signal, pouvant être la cause d'erreurs dans le décodage du paquet de données

4

qui suit la salve de synchronisation, et l'on comprend que cette dérive aura des conséquences d'autant plus importantes que le déphasage initial est déjà élevé.

Il apparaît donc que la remise en phase assez grossière, dont le principe a été rappelé ci-dessus, présente des inconvénients. L'invention vise précisément à éliminer ces inconvénients, en fournissant un procédé permettant d'affiner la remise en phase.

A cet effet, l'invention a essentiellement pour objet un procédé pour l'affinage de la remise en phase d'une horloge locale dans lequel, après présélection d'un signal d'horloge le plus favorable parmi n signaux disponibles présentant des déphasages successifs égaux, ce signal d'horloge présélectionné étant celui dont les fronts, par exemple montants, présentent l'écart minimum par rapport au milieu des 1 d'une salve de synchronisation, on compare ledit signal présélectionné avec au moins un signal passant d'un premier état à un second état au milieu de chaque 1 de la salve de synchronisation, de manière à déterminer si le signal d'horloge présélectionné se trouve en avance, en retard ou en phase par rapport à un signal d'horloge idéal, on mémorise le résultat de cette comparaison, et on forme, en fonction de ce résultat, un signal d'horloge se trouvant en retard, en avance ou en phase par rapport au signal d'horloge présélectionné, de manière à obtenir le signal d'horloge le plus favorable parmi 3 n signaux possibles.

Ce procédé permet, par un processus simple, de créer trois phases d'horloge à partir d'une seule phase, et plus particulièrement, dans un système de "vidéotexte", de démoduler avec 3 n phases d'horloge distinctes des paquets de données qui, sans cela, l'auraient été avec n phases seulement, ce qui peut éviter les risques d'erreurs de lecture. En partant du système précédemment rappelé avec quatre phases d'horloge disponibles, séparées par des déphasages mutuels de $\pi/2$, on obtient ainsi douze phases d'horloge, déphasées de $\pi/6$ entre elles, de sorte que l'écart maximum entre l'horloge idéale et l'horloge finalement obtenue n'est plus $\pm \pi/4$ mais $\pm \pi/12$, cette dernière valeur étant parfaitement acceptable pour une lecture de données dans un système de "vidéo-texte" utilisant un codage binaire sans retour à zéro.

Il est à noter que, du point de vue de la simplicité de réalisation, le procédé selon l'invention, qui consiste à choisir d'abord une phase parmi n phases disponibles et à effectuer une éventuelle correction de phase ultérieure après une comparaison, est beaucoup plus avantageux que la solution qui consisterait à créer 3 n phases distinctes et à choisir une phase parmi ces 3 n phases.

Suivant une forme de mise en oeuvre du procédé selon l'invention, on obtient le signal passant d'un premier état à un second état au milieu de chaque 1 de la salve de synchronisation en engendrant d'abord un signal en "dents de scie" à partir de ladite salve, chaque "dent de scie" correspondant à un 1 de la salve, en déterminant la demi-valeur de crête de ce signal en "dents de scie", en comparant cette demi-valeur de crête au signal en "dents de scie" lui-même, et en formant un signal dont l'état correspond au résultat de cette comparaison. C'est ce dernier signal, et/ou le signal complémentaire, qui est ensuite exploité pour l'autre comparaison, c'est-à-dire celle effectuée avec le signal d'horloge le plus favorable présélectionné.

Le dispositif pour la mise en oeuvre de ce procédé comprend essentiellement des moyens pour la formation d'au moins un signal passant d'un premier état à un second état au milieu de chaque 1 de la salve de synchronisation, et des circuits logiques recevant ladite salve, le signal d'horloge présélectionné et le ou les signaux passant d'un premier état à un second état au milieu de chaque 1 de la salve de synchronisation, ces circuits logiques incluant, d'une part, des moyens aptes à délivrer des impulsions représentatives, les unes, d'une avance et, les autres, d'un retard du signal d'horloge présélectionné, d'autre part, des moyens aptes à mémoriser l'état d'avance ou de retard de l'horloge présélectionnée représenté par les impulsions précitées, et à commander, selon le cas, le retard, l'avance ou le maintien de la phase de cette horloge présélectionnée.

Suivant un mode de réalisation particulier, les moyens aptes à délivrer des impulsions représentatives d'une avance ou d'un retard comprennent une bascule de type D recevant, à ses entrées, la salve de synchronisation et le signal d'horloge présélectionné ; une première porte ET à trois entrées recevant respectivement la salve de synchronisation, un signal passant d'un premier à un second état au milieu de chaque 1 de la salve de synchronisation, et un signal de sortie de la bascule précitée ; et une seconde porte ET à trois entrées recevant respectivement la salve de synchronisation, le signal complémentaire du précédent passant d'un premier à un second état au milieu de chaque 1 de la salve de synchronisation, et le signal de sortie complémentaire du précédent de la bascule précitée ; de sorte que les deux portes ET sont aptes à délivrer, à leur sortie, des impulsions représentatives, pour la première porte, d'une avance et, pour la seconde porte, d'un retard.

Les moyens de mémorisation peuvent être constitués par deux autres bascules, telles que du type RS, dont les entrées sont reliées d'une part à la sortie de l'une des portes ET précitées, d'autre part à une source d'impulsions de réarmement. Dans le cas d'application de l'invention à un système de "vidéotexte", le réarmement est avantageusement effectué, avant le début de chaque salve de synchronisation, par le signal de "synchronisation ligne", ceci permettant, comme déjà indiqué plus haut, d'effectuer une nouvelle remise en phase avant chaque nouveau paquet de données.

De toute façon, l'invention sera bien comprise à l'aide de la description qui suit, en référence au dessin schématique annexé représentant, à titre d'exemple non limitatif, une forme de réalisation de ce dispositif pour l'affinage de la remise en phase d'une horloge locale, et illustrant le procédé mis en oeuvre par ce dispositif :

la figure 1 constitue, comme déjà indiqué plus haut, un diagramme illustrant la technique actuelle de comparaison avec quatre signaux d'horloge ;

la figure 2 est un autre diagramme, illustrant la partie du procédé selon l'invention visant à la détection du milieu de chaque 1 de la salve de synchronisation ;

la figure 3 représente, de façon très schématique, une partie des circuits permettant de détecter le milieu des 1 de la salve ;

la figure 4 est un schéma des circuits logiques du dispositif ;

la figure 5 est un dernier diagramme, expliquant le fonctionnement de ces circuits logiques.

Le procédé selon l'invention comporte l'opération de comparaison du milieu des 1 de la salve de synchronisation $S$, qui correspondent aux fronts montants de l'horloge idéale, avec les signaux de l'horloge la plus favorable, parmi les n disponibles.

La présélection de l'horloge disponible la plus favorable s'effectue de façon connue, comme

8

décrit déjà ci-dessus en référence à la figure 1, correspondant au cas pris pour exemple où : n=4.

La détection du milieu de chaque 1 de la salve de synchronisation S est réalisée comme suit :

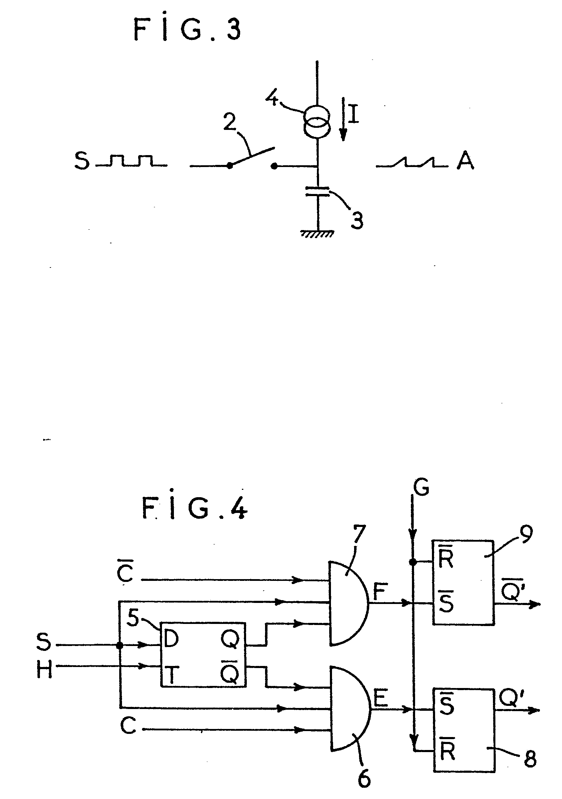

Un signal en "dents de scie" A est engendré à partir de la salve S, chaque "dent de scie" correspondant à un 1 de la salve comme le montre la partie supérieure du diagramme de la figure 2. Le signal en "dents de scie" A peut être obtenu par le circuit dont le schéma de principe apparaît sur la figure 3 : la salve S commute un interrupteur 2, ce qui permet de charger un condensateur 3, sous une intensité I constante fournie par un générateur de courant 4, pendant que l'interrupteur 2 est ouvert. Lorsque cet interrupteur 2 est fermé, c'est-à-dire au moment où la salve revient au niveau O, le condensateur 3 est déchargé instantanément.

On prend la valeur de crête du signal A en "dents de scie", on divise cette valeur de crête par deux, et la demi-valeur de crête ainsi obtenue est comparée au signal A lui-même. Le résultat de cette comparaison est un signal B, qui a des fronts, montants par exemple, lorsque le signal A atteint la moitié de sa valeur de crête. Etant donné que chaque "dent de scie" du signal A correspond à la durée d'un 1 de la salve S, et que sa partie montante est linéaire compte tenu des caractéristiques du circuit de la figure 3, les fronts montants du signal B correspondant bien au milieu des 1 de la salve S.

Il est à noter que, compte tenu du temps de déstockage du comparateur qui délivre le signal B, les fronts descendants de ce signal ne correspondent pas à la fin de chaque 1 de la salve S, mais présentent un certain retard mis en évidence sur la figure 2 par les parties hachurées. Une élimination de cet effet

9

peut être réalisée par une porte ET, recevant à ses entrées la salve $\underline{S}$ et le signal $\underline{B}$, et délivrant à sa sortie un autre signal $\underline{C}$, dont les fronts montants correspondent au milieu des 1 de la salve $\underline{S}$ et dont les fronts descendants correspondent exactement à la fin des 1 de la salve $\underline{S}$.

On forme aussi un signal $\underline{C}$ complémentaire du signal $\underline{C}$ précédemment défini, donc ayant ses fronts descendants synchronisés avec le milieu des 1 de la salve $\underline{S}$, et ses fronts montants synchronisés avec la fin des 1 de la salve $\underline{S}$.

Les signaux $\underline{C}$ et $\underline{\overline{C}}$, formés comme il vient d'être décrit, sont amenés à des circuits logiques représentés sur la figure 4, circuits qui reçoivent aussi la salve de synchronisation $\underline{S}$ et le signal d'horloge $\underline{H}$ présélectionné, et qui ont pour rôle :

- de déterminer si ce signal $\underline{H}$ présélectionné est en avance ou en retard par rapport au milieu des 1 de la salve $\underline{S}$, et

- de mémoriser, pendant toute la durée d'une ligne du signal vidéo, c'est-à-dire jusqu'à l'apparition de la prochaine salve, l'état d'avance ou de retard de l'horloge présélectionnée.

Le circuit considéré comprend une bascule $\underline{5}$ de type D, dont l'entrée "données" D, reçoit la salve $\underline{S}$ et dont l'entrée "échantillonnage" T reçoit le signal d'horloge $\underline{H}$ présélectionné. Une première porte ET à trois entrées $\underline{6}$ reçoit :

- le signal $\underline{C}$ précédemment défini ;
- la salve $\underline{S}$ ; et
- le signal de sortie $\underline{\overline{Q}}$ de la bascule $\underline{5}$.

Une seconde porte ET à trois entrées $\underline{7}$ reçoit :

- le signal $\underline{\overline{C}}$ précédemment défini,
- la salve $\underline{S}$ et
- le signal de sortie $\underline{Q}$ de la bascule $\underline{5}$.

10

Ce circuit comprend encore deux bascules de sortie 8 et 9, de type RS. La première de ces bascules 8 reçoit, d'une part, le signal de sortie E et de la porte ET 6, d'autre part, un signal de remise à zéro G. La seconde bascule 9 reçoit, d'une part, le signal de sortie F de la porte ET 7, d'autre part, le signal de remise à zéro G. Les sorties ici utilisées de ces bascules sont désignées par Q' et $\overline{Q}$'.

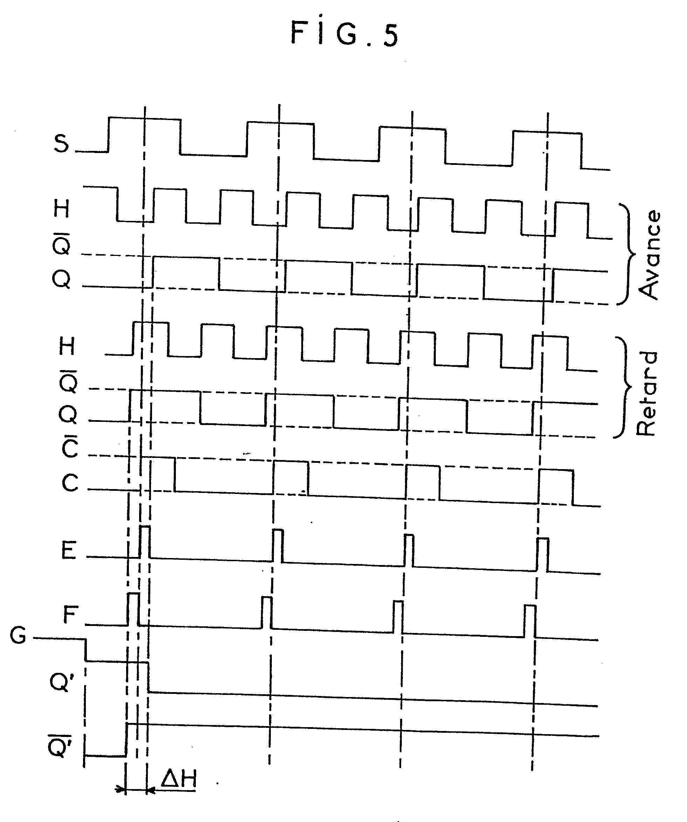

Le fonctionnement de ce circuit, dans les hypothèses d'avance et de retard du signal d'horloge présélectionné, est expliqué par le diagramme de la figure 5, sur lequel sont représentés les différents signaux qui interviennent.

Dans le cas où le signal d'horloge H présélectionné est en avance (deuxième ligne du diagramme), on obtient, à la sortie de la bascule 5, les signaux complémentaires Q et $\overline{Q}$ suivant la troisième ligne du diagramme : le signal Q a la même fréquence que la salve S, mais ses fronts montants sont synchronisés avec les fronts montants du signal d'horloge H qui précèdent immédiatement le milieu des 1 de la salve S.

Dans le cas où le signal d'horloge H présélectionné est en retard (quatrième ligne du diagramme), on obtient, à la sortie de la bascule 5, les signaux complémentaires Q et $\overline{Q}$ suivant la cinquième ligne du diagramme : le signal Q a la même fréquence que la salve S, mais ses fronts montants sont synchronisés avec les fronts montants du signal d'horloge H qui suivent immédiatement le milieu des 1 de la salve S.

Lorsque le signal d'horloge H est en avance, on obtient, en combinant par la porte ET 6, les signaux C, S et $\overline{Q}$, une série d'impulsions constituant le signal E, chacune de ces impulsions ayant son front montant synchronisé avec le milieu d'un 1 de la salve S, et son front descendant synchronisé avec un front montant

11

du signal d'horloge H̲. Aucun signal n'est, dans ce cas, délivré à la sortie F̲ de l'autre porte ET 7̲.

Lorsque le signal d'horloge H̲ est en retard, on obtient, en combinant par la porte ET 7̲ les signaux C̲, S̲ et Q̲, une série d'impulsions constituant le signal F̲, chacune de ces impulsions ayant son front montant synchronisé avec un front montant du signal d'horloge H̲, et son front descendant synchronisé avec le milieu d'un 1 de la salve S̲. Aucun signal n'est, dans ce cas, délivré à la sortie E de l'autre porte ET 6̲.

Il résulte de ce qui précède que les deux signaux E̲ et F̲, de par leur génération, ne peuvent être présents simultanément, et que ces signaux indiquent respectivement, par leur présence, l'avance ou le retard du signal d'horloge H̲ présélectionné. De plus, si ce signal d'horloge H̲ est juste en phase avec l'horloge idéale, aucun des signaux E̲ et F̲ n'est présent, de sorte que ce troisième cas possible correspond aussi à un état particulier des sorties des portes 6̲ et 7̲.

Les deux bascules de sortie 8̲ et 9̲ étant réarmées par le signal G̲ juste avant le début de la salve S̲, par exemple par le signal de "synchronisation ligne", leurs sorties respectives Q̲' et Q̲̅' sont initialement dans un état privilégié, indiqué en bas et à gauche du diagramme de la figure 5. Si une ou plusieurs impulsions du signal E̲ se présentent, il y a déclenchement de la bascule 8̲ et la bascule Q̲' change d'état ; cette bascule 8̲ mémorise ainsi une avance de phase du signal d'horloge H̲, jusqu'à la prochaine remise à zéro. De même, si une ou plusieurs impulsions du signal F̲ se présentent, il y a déclenchement de la bascule 9̲ et la sortie Q̲' change d'état ; cette bascule 9̲ mémorise ainsi un retard de phase du signal d'horloge H̲, jusqu'à la prochaine remise à zéro. Dans le cas où ce signal d'horloge est juste en phase, étant donné qu'aucun des signaux E et F n'est alors présent, les états des deux bascules de sortie 8 et 9 restent inchangés, par rapport à l'état initial imposé par le réarmement.

Les résultats "avance", "retard" ou "en phase" sont ainsi non seulement déterminés, mais aussi mémorisés. En fonction de ces résultats, on corrige si nécessaire la phase d'horloge présélectionnée, pour l'utiliser en lecture des données du paquet transmis à la suite de la salve S.

Il est à noter que, compte tenu des tolérances de fonctionnement des portes logiques, le cas où le résultat mémorisé est celui d'une horloge prédéterminée déjà en phase n'est pas du tout exceptionnel. Ainsi, suivant la position du signal d'horloge présélectionné à l'intérieur d'une certaine plage de variation de phase $\Delta H$, on retarde ce signal d'une valeur déterminée s'il se trouve en avance, on avance au contraire ce signal d'une valeur déterminée s'il se trouve en retard, ou on conserve ce signal s'il est sensiblement en phase par rapport à l'horloge idéale, ce qui permet de tripler le nombre de phases d'horloge possibles. Il est à noter que la valeur déterminée, d'avance ou de retard, est choisie de préférence égale à un tiers du déphasage entre les n phases d'horloge disponibles, de manière à obtenir, en définitive, 3 n phases possibles avec des décalages tous égaux. Bien entendu, pour "avancer" le signal d'horloge présélectionné, on le retarde en fait d'une valeur convenable, égale au complément par rapport à $2\pi$ de l'avance souhaitée.

Comme il va de soi, l'invention ne se limite pas à la seule forme de réalisation de ce dispositif pour l'affinage de la remise en phase d'une horloge locale qui a été décrit ci-dessus, à titre d'exemple ; elle en embrasse, au contraire, toutes les variantes comportant

13

des moyens équivalents. C'est ainsi, notamment, que l'on ne s'éloignerait pas du cadre de l'invention en réalisant différemment les fonctions logiques du circuit de la figure 4, par exemple en remplaçant, dans ce circuit, les bascules de type D et RS par des bascules d'un autre type mais utilisées de la même manière.

14

REVENDICATIONS

1. Procédé pour l'affinage de la remise en phase d'une horloge locale, dans lequel on procède à une présélection d'un signal d'horloge le plus favorable parmi n signaux disponibles présentant des déphasages successifs sensiblement égaux, ce signal d'horloge présélectionné étant celui dont les fronts, par exemple montants, présentent l'écart minimum par rapport au milieu des 1 d'une salve de synchronisation, caractérisé en ce que, en outre, on compare ledit signal présélectionné avec au moins un signal passant d'un premier état à un second état au milieu de chaque 1 de la salve de synchronisation de manière à déterminer si le signal d'horloge présélectionné se trouve en avance, en retard ou en phase par rapport à un signal d'horloge idéal, on mémorise le résultat de cette comparaison et on forme, en fonction de ce résultat, un signal d'horloge se trouvant en retard, en avance ou en phase par rapport au signal d'horloge présélectionné, de manière à obtenir le signal d'horloge le plus favorable parmi 3 n signaux possibles.

2. Procédé selon la revendication 1, caractérisé en ce qu'on obtient le signal passant d'un premier état à un second état au milieu de chaque 1 de la salve de synchronisation en engendrant d'abord un signal en "dents de scie" à partir de ladite salve, chaque "dent de scie" correspondant à un 1 de la salve, en déterminant la demi-valeur de crête de ce signal en "dents de scie", en comparant cette demi-valeur de crête au signal en "dents de scie" lui-même, et en formant un signal dont l'état correspond au résultat de cette comparaison.

3. Dispositif pour l'affinage de la remise en phase d'une horloge locale, destiné à la mise en oeuvre du procédé selon la revendication 1 ou 2, caractérisé en ce qu'il comprend des moyens pour la formation d'au moins un signal passant d'un premier état à un second état au milieu de chaque 1 de la salve de synchronisation, et des circuits logiques recevant ladite salve, le signal d'horloge présélectionné et le ou les signaux passant d'un premier état à un second état au milieu de chaque 1 de la salve de synchronisation, ces circuits logiques incluant, d'une part, des moyens aptes à délivrer des impulsions représentatives, les unes, d'une avance et, les autres, d'un retard du signal d'horloge présélectionné, d'autre part, des moyens aptes à mémoriser l'état d'avance ou de retard de l'horloge présélectionnée, représenté par les impulsions précitées et à commander, selon le cas, le retard, l'avance ou le maintien de la phase de cette horloge présélectionnée.

4. Dispositif selon la revendication 3, destiné à la mise en oeuvre du procédé selon la revendication 2, caractérisé en ce que les moyens pour la formation d'au moins un signal passant d'un premier à un second état au milieu de chaque 1 de la salve de synchronisation comprennent un circuit avec un condensateur, un générateur de courant apte à charger le condensateur sous une intensité constante, et un interrupteur commuté par la salve de synchronisation de manière à engendrer le signal en "dents de scie".

5. Dispositif selon la revendication 3 ou 4, caractérisé en ce que les moyens aptes à délivrer des impulsions représentatives d'une avance ou d'un retard comprennent une bascule de type D recevant, à ses entrées, la salve de synchronisation et le signal d'horloge présélectionné ; une première porte ET à trois entrées recevant respectivement la salve de synchronisation, un signal passant d'un premier à un second état au milieu de chaque 1 de la salve de synchronisation, et un signal de sortie de la bascule précitée ; et une seconde porte ET à trois entrées recevant respectivement la salve de synchronisation, le signal complémentaire du précédent passant d'un premier à un second état au milieu de chaque 1 de la salve de synchronisation, et le signal de sortie complémentaire du précédent de la bascule précitée ; de sorte que les deux portes ET sont aptes à délivrer, à leur sortie, des impulsions représentatives, pour la première porte, d'une avance et, pour la seconde porte, d'un retard.

6. Dispositif selon la revendication 5, caractérisé en ce que les moyens de mémorisation sont constitués par deux autres bascules, telles que du type RS, dont les entrées sont reliées d'une part à la sortie de l'une des portes ET précitées, d'autre part, à une source d'impulsions de réarmement.

7. Dispositif selon la revendication 6, caractérisé en ce qu'il est appliqué à un système de "vidéotexte", pour l'affinage de la remise en phase d'une horloge de lecture de paquets de données dont chacun est inséré sur une ligne de télévision et précédé d'une salve de synchronisation, le réarmement des bascules de mémorisation étant effectué, avant le début de chaque salve de synchronisation, par le signal de "synchronisation ligne".

FİG.1

FİG.2

FİG.3

FİG.4

FIG.5

## DOCUMENTS CONSIDERES COMME PERTINENTS

| Catégorie | Citation du document avec indication, en cas de besoin, des parties pertinentes | Revendication concernée |
|---|---|---|
| | <u>US - A - 3 376 385</u> (SMITH)<br>* Colonne 1, ligne 68 à colonne 2, ligne 10 *<br><br>-- | 1,3 |
| | <u>US - A - 3 185 963</u> (PETERSON)<br>* Colonne 1, lignes 60-68 *<br><br>-- | 1,3 |
| | <u>US - A - 3 440 547</u> (HOUCKE)<br>* Colonne 2, lignes 11-20; colonne 3, lignes 31-48; colonne 5, lignes 29-34 *<br><br>-- | 1,3,6 |
| | <u>US - A - 3 213 375</u> (ST. JOHN)<br>* Colonne 4, lignes 21-24 *<br><br>-- | 1,4 |
| | <u>US - A - 3 668 315</u> (HEITZMAN)<br>* Colonne 1, lignes 34-37 *<br><br>-- | 1,3 |
| A | <u>FR - A - 2 384 403</u> (MATSUSHITA)<br>* Page 3, ligne 35 à page 4, ligne 2; page 12, lignes 21-29 *<br><br>-- | 1,7 |
| A | <u>US - A - 4 129 748</u> (SAYLOR)<br>* Figures 1,2,4; colonne 15, lignes 8-21 *<br><br>-- | 1,7 |
| A | <u>GB - A - 1 122 790</u> (C.F.T.H.)<br>* Revendication 1 * | 1 |

**CLASSEMENT DE LA DEMANDE (Int. Cl.)**

H 04 L 7/02
H 04 N 7/04

**DOMAINES TECHNIQUES RECHERCHES (Int. Cl. 3)**

H 04 L 7/02
H 04 N 7/04
H 03 D 13/00
H 04 L 7/10

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| X | Le présent rapport de recherche a été établi pour toutes les revendications |
|---|---|

| Lieu de la recherche | Date d'achevement de la recherche | Examinateur |
|---|---|---|
| La Haye | 21-07-1980 | GEISLER |